# FASCICULE DE BREVET EUROPEEN

(11) **EP 4 385 881 B1**
(45) Date de publication et mention de la délivrance du brevet: **25.02.2026**
(21) Numéro de dépôt: 23215130.8
(22) Date de dépôt: 08.12.2023
(51) Int. Cl.: B64C 1/14, B29C 65/00

(54) **PROCÉDÉ DE FABRICATION D'UN CADRE DE HUBLOT D'AÉRONEF COMPORTANT UNE COUCHE BARRIÈRE, CADRE DE HUBLOT OBTENU À PARTIR DE CE PROCÉDÉ ET AÉRONEF COMPRENANT AU MOINS UN TEL CADRE DE HUBLOT**
VERFAHREN ZUR HERSTELLUNG EINES FLUGZEUGFENSTERRAHMENS MIT EINER BARRIERESCHICHT, AUS DIESEM VERFAHREN HERGESTELLTER FENSTERRAHMEN UND FLUGZEUG MIT MINDESTENS EINEM SOLCHEN FENSTERRAHMEN
METHOD FOR MANUFACTURING AN AIRCRAFT WINDOW FRAME COMPRISING A BARRIER LAYER, WINDOW FRAME OBTAINED FROM SAID METHOD AND AIRCRAFT COMPRISING AT LEAST ONE SUCH WINDOW FRAME

(30) Priorité: 15.12.2022 FR 2213481
(43) Date de publication de la demande: 19.06.2024
(73) Titulaire: AIRBUS OPERATIONS (S.A.S.), 31060 Toulouse (FR); Airbus Operations S.L., 28906 Getafe (ES)
(72) Inventeur: DRESSLER, Günther, 88090 IMMENSTAAD (DE); BUTRAGUENO-MARTINEZ, Asuncion, 28906 GETAFE (ES); TROUVE, Rodolphe, 301060 TOULOUSE (FR); FELTIN, Dirk, 01219 DRESDEN (DE)
(74) Mandataire: Fantin, Laurent

(56) Documents cités:
- US-A1- 2003 222 371
- US-A1- 2009 202 763
- US-A1- 2010 096 063
- US-A1- 2012 119 031
- US-A1- 2015 231 834
- US-B2- 7 175 795
- US-B2- 8 096 506

## Description

La présente demande se rapporte à un procédé de fabrication d'un cadre de hublot d'aéronef comportant une couche barrière, à un cadre de hublot obtenu à partir dudit procédé ainsi qu'à un aéronef comprenant au moins un tel cadre de hublot.

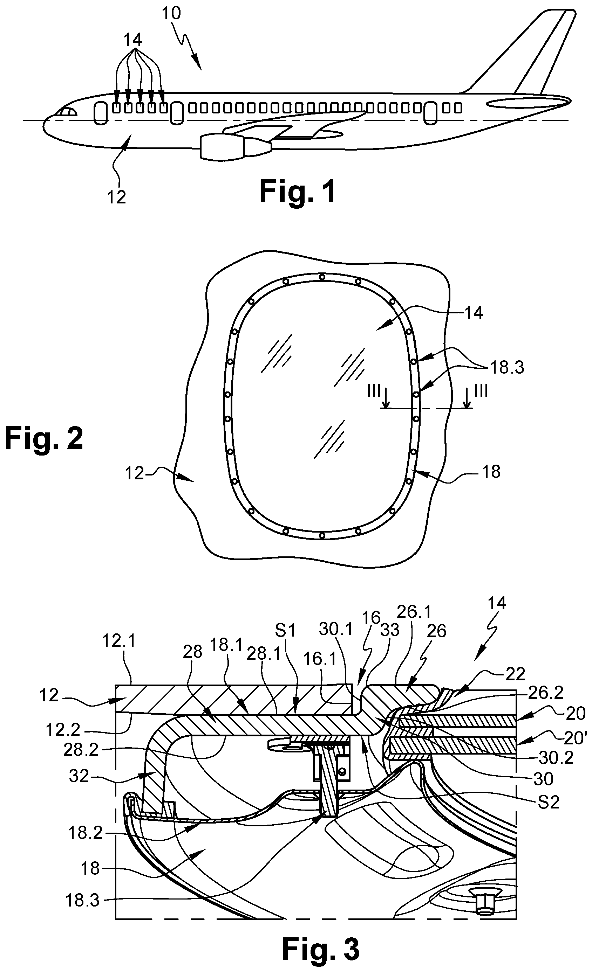

Selon un mode de réalisation de l'art antérieur visible sur les figures 1 et 2, le fuselage 10 d'un aéronef comprend une paroi 12 présentant une face extérieure 12.1 et une face intérieure 12.2 ainsi qu'une pluralité de hublots 14.

Au droit de chaque hublot 14, la paroi 12 comprend une ouverture 16 délimitée par un chant 16.1 reliant les faces extérieure et intérieure 12.1, 12.2. Comme illustré sur la figure 3, chaque hublot 14 comprend un encadrement 18 supportant deux parois transparentes 20, 20' ainsi qu'un joint périphérique 22. L'encadrement 18 comprend un premier cadre 18.1 relié à la paroi 12 ainsi qu'un deuxième cadre 18.2 relié au premier cadre 18.1 par des éléments de liaison 18.3, les parois transparentes 20, 20' et le joint périphérique 22 étant intercalés entre les premier et deuxième cadres 18.1, 18.2.

Le premier cadre 18.1 comprend une première partie 26 positionnée dans l'ouverture 16, une deuxième partie 28 plaquée contre la face intérieure 12.2 de la paroi 12 du fuselage, une partie intermédiaire 30 reliant les première et deuxième parties 26, 28 ainsi qu'une troisième partie 32 reliée à la deuxième partie 28 et sensiblement perpendiculaire à cette dernière, le deuxième cadre 18.2 prenant appui contre la troisième partie 28. Selon une configuration, la partie intermédiaire 30 est située à une première extrémité de la deuxième partie 28 et la troisième partie 32 est située à une deuxième extrémité de la deuxième partie 28 et forme un L avec cette dernière. Une fois l'encadrement 18 monté, la première partie 26 présente une face extérieure 26.1 affleurant la face extérieure 12.1 de la paroi 12 du fuselage et une face intérieure 26.2 sensiblement parallèle à la face extérieure 26.1. La deuxième partie 28 comprend une face extérieure 28.1 plaquée contre la face intérieure 12.2 de la paroi 12 du fuselage, décalée vers l'intérieur par rapport à la face extérieure 26.1 de la première partie 26, et une face intérieure 28.2 sensiblement parallèle la face extérieure 28.1. La partie intermédiaire 30 présente une face extérieure 30.1 reliant les faces extérieures 26.1, 28.1 des première et deuxième parties 26, 28 ainsi qu'une face intérieure 30.2 reliant les faces intérieures 26.2, 28.2 des première et deuxième parties 26, 28.

Ainsi, le premier cadre 18.1 comprend :
- une première surface S1 composée des faces extérieures 26.1, 28.1, 30.1 des première et deuxième parties 26, 28 ainsi que de la partie intermédiaire 30,
- une deuxième surface S2 composée des faces intérieures 26.2, 28.2, 30.2 des première et deuxième parties 26, 28 ainsi que de la partie intermédiaire 30.

Sur le plan géométrique, la zone de jonction 33, reliant les faces extérieures 26.1, 30.1 de la première partie 26 et de la partie intermédiaire 30, présente une forte courbure afin que la face extérieure 30.1 de la partie intermédiaire 30 soit sensiblement parallèle au chant 16.1 de l'ouverture 16 et faiblement espacée dudit chant 16.1. Cette géométrie permet de limiter les perturbations aérodynamiques.

Selon un mode de réalisation, le premier cadre 18.1 est réalisé d'un seul tenant, en matériau composite, et comprend des fibres de renfort noyées dans une matrice de résine.

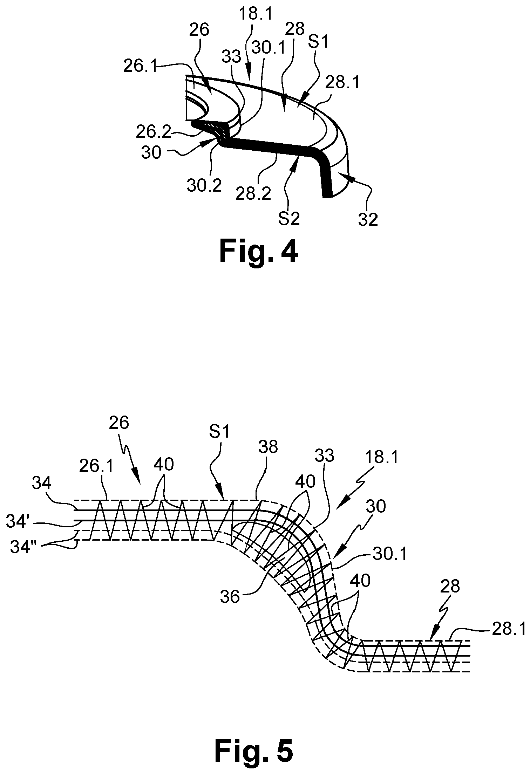

Comme illustré sur les figures 4 et 5, le premier cadre 18.1 comprend des couches de fibres 34, 34', 34", des renforts 36, une couche en matériau conducteur 38 ainsi que des coutures 40 pour maintenir les couches 34, 38 et les renforts 36 assemblés. A titre d'exemple, la couche en matériau conducteur 38 est un grillage en cuivre et permet d'obtenir une couche de protection contre la foudre.

Selon un mode de réalisation visible sur la figure 5, le premier cadre 18.1 comprend à partir de la première surface S1 :
- une couche en matériau conducteur 38 qui s'étend sur la face extérieure 26.1 de la première partie 26 et se prolonge au niveau de la zone de jonction 33 à forte courbure,
- deux couches de fibres 34, 34' qui s'étendent sur les faces extérieures 28.1, 30.1 de la deuxième partie 28 et de la partie intermédiaire 30 ainsi qu'au niveau de la zone de jonction 33 à forte courbure,
- un renfort 36 avec une section en D positionné au niveau de la zone de jonction 33 à forte courbure.

Généralement, le premier cadre 18.1 comprend d'autres couches de fibres 34", le renfort 36 étant intercalé entre les couches de fibres 34', 34".

Comme illustré sur la figure 5, les coutures 40 relient au moins les première et deuxième couches de fibres 34, 34' ainsi que le renfort 36 et sont positionnées au niveau des première et deuxième parties 26, 28 ainsi que de la partie intermédiaire 30.

Après la mise en place des coutures 40, l'assemblage des couches de fibres 34, des renforts 36 et de la couche en matériau conducteur 38 est consolidé ou polymérisé. Lors de cette étape de consolidation ou de polymérisation, les fibres des différentes couches de fibres 34, 34' sont noyées dans une résine thermodurcissable lors d'un procédé de moulage par transfert de résine.

A l'issue de l'étape de consolidation ou de polymérisation, le premier cadre 18.1 présente, au niveau de la première surface S1, des zones d'accumulation de résine au niveau des coutures 40 ainsi qu'au niveau de la zone de jonction 33 à forte courbure du fait de la présence du renfort 36 avec une section en D. Ainsi, en raison de ces surplus ponctuels de résine, la face extérieure 26.1 de la première partie 26 du premier cadre 18.1 n'a pas un comportement homogène, notamment au niveau de la zone de jonction 33 à forte courbure.

A l'issue de l'assemblage de l'aéronef et notamment après la mise en place des hublots 14, la face extérieure 12.1 de la paroi 12 du fuselage est recouverte d'au moins une couche de peinture qui recouvre également la face extérieure 26.1 de la première partie 26 du premier cadre 18.1 de chaque hublot 14.

Du fait que la face extérieure 26.1 de la première partie 26 du premier cadre 18.1 n'ait pas un comportement homogène, cela peut engendrer une modification visuelle de la peinture.

Le document US2012/119031 A1 décrit un cadre de hublot comportant plusieurs couches de fibres noyées dans une matrice de résine, une couche barrière étant positionnée au niveau d'une partie d'une face du cadre. Cette solution n'est pas satisfaisante car l'une des faces n'est pas homogène.

Le document US8096506 B2 décrit un cadre de hublot comportant plusieurs préformes ou couches de fibres noyées dans une matrice de résine. Cette solution ne permet pas d'obtenir des faces homogènes.

La présente invention vise à remédier à tout ou partie des inconvénients de l'art antérieur.

A cet effet, l'invention a pour objet un procédé de fabrication d'un cadre de hublot d'aéronef, ledit cadre comportant une première surface qui présente au moins des première et deuxième faces s'étendant sur tout le pourtour du cadre et reliées par une zone de jonction courbe, ledit cadre étant réalisé en un matériau composite qui comporte des fibres noyées dans une matrice de résine. Ce procédé de fabrication comprend une étape d'assemblage de couches de fibres et d'au moins un renfort situé au niveau de la zone de jonction et présentant des premier et deuxième bords périphériques, une étape de consolidation ou de polymérisation de l'assemblage ainsi qu'une étape de démoulage du cadre.

Selon l'invention, lors de l'étape d'assemblage, une couche barrière est positionnée entre le renfort et la première surface de manière à recouvrir le renfort et former une barrière limitant une propagation de résine en direction de la première surface.

La présence de cette couche barrière permet d'éviter la propagation de la résine vers la première surface et la formation de zones ponctuelles d'accumulation de résine. Ainsi, la surface extérieure du cadre a un comportement plus homogène et n'engendre pas de modifications visuelles sur la peinture.

Selon d'autres caractéristiques prises isolément ou en combinaison :
- lors de l'étape d'assemblage, la couche barrière est positionnée au contact du renfort ;
- la couche barrière ne s'étend pas au-delà des premier et deuxième bords périphériques du renfort ;
- au moins une couture est réalisée de manière à relier au moins le renfort et la couche barrière, la couture comprenant des piqures décalées de la première surface au moins au niveau des première et deuxième faces ;
- le procédé comprend une étape de saupoudrage d'une résine entre les couches de fibres et de chauffage à une température inférieure à une température de polymérisation ou de consolidation pour activer la pégosité de la résine afin de maintenir les différentes couches liées entre elles avant l'étape de consolidation ou de polymérisation.

L'invention a également pour objet un cadre de hublot d'aéronef comportant une première surface qui présente au moins des première et deuxième faces, s'étendant surtout le pourtour du cadre, reliées par une zone de jonction courbe, ledit cadre étant réalisé en un matériau composite qui comporte des fibres noyées dans une matrice de résine, ledit cadre comprenant un empilage de couches de fibres ainsi qu'au moins un renfort situé au niveau de la zone de jonction et présentant des premier et deuxième bords périphériques.

Selon l'invention, le cadre comprend au moins une couche barrière recouvrant le renfort, positionnée entre le renfort et la première surface et configurée pour former une barrière limitant une propagation de la résine en direction de la première surface.

Selon d'autres caractéristiques prises isolément ou en combinaison :
- la couche barrière est en contact avec le renfort ;
- la couche barrière ne s'étend pas au-delà des premier et deuxième bords périphériques du renfort ;
- la couche barrière comprend au moins un pli de fibres de verre ;
- le cadre comprend au moins une couture reliant au moins le renfort et la couche barrière et comportant des piqures espacées de la première surface.

L'invention a également pour objet un aéronef comprenant au moins un cadre de hublot selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue de face d'un hublot,
- La figure 3 est une coupe selon la ligne III-III de la figure 2 d'un encadrement d'un hublot illustrant un mode de réalisation de l'art antérieur,
- La figure 4 est une vue en perspective d'une partie d'un premier cadre de hublot illustrant un premier mode de réalisation de l'art antérieur,
- La figure 5 est une coupe schématique d'un cadre de hublot illustrant un mode de réalisation de l'art antérieur,
- La figure 6 est une coupe d'un encadrement d'un hublot illustrant un mode de réalisation de l'invention.
- La figure 7 est une coupe schématique d'un cadre de hublot illustrant un mode de réalisation de l'invention.

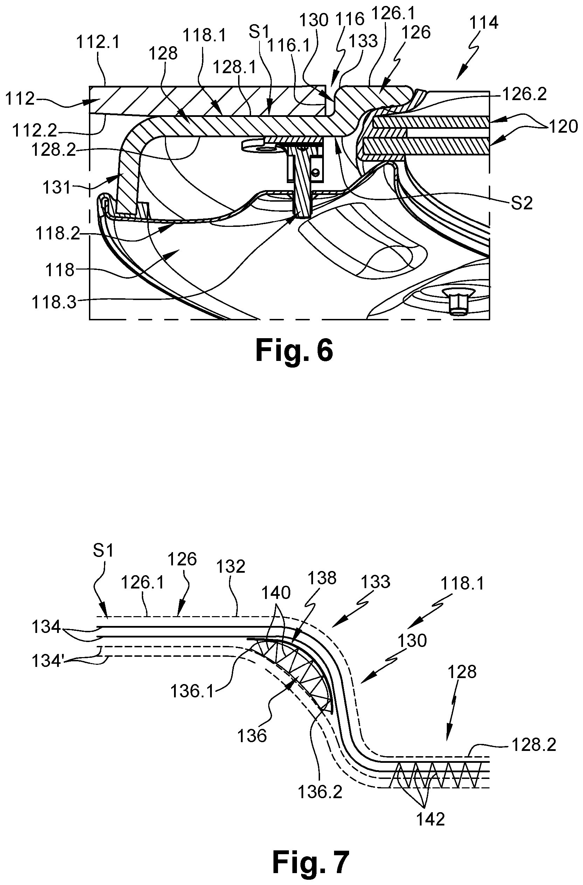

Comme illustré sur la figure 6, une paroi de fuselage 112 d'un aéronef comprend une face extérieure 112.1, une face intérieure 112.2 opposée à la face extérieure 112.1 ainsi qu'au moins un hublot 114 positionné au niveau d'une ouverture 116 délimitée par un chant 116.1 reliant les faces extérieure et intérieure 112.1, 112.2. Le hublot 114 comprend au moins une paroi transparente 120 ainsi qu'un encadrement 118 situé autour de la paroi transparente 120 et configuré pour la relier à la paroi de fuselage 112. Cet encadrement 118 comprend des premier et deuxième cadres 118.1, 118.2 entre lesquels la paroi transparente 120 du hublot 118 est positionnée.

Le premier cadre 118.1 comprend une première partie 126 destinée à être positionnée dans l'ouverture 116 de la paroi de fuselage 112 ainsi qu'une deuxième partie 128 destinée à être plaquée contre la face intérieure 112.2 de la paroi de fuselage 112.

Lorsque l'encadrement 118 est positionné dans une ouverture 116 de la paroi de fuselage 112, la première partie 126 comprend une face extérieure 126.1 affleurant la face extérieure 112.1 de la paroi de fuselage 112 ainsi qu'une face intérieure 126.2 opposée à la face extérieure 126.1. La deuxième partie 128 comprend une face extérieure 128.1 plaquée contre la face intérieure 112.2 de la paroi de fuselage 112 ainsi qu'une face intérieure 128.2 opposée à la face extérieure 128.1.

Selon une configuration, les première et deuxième parties 126, 128 sont directement reliées. Selon cette configuration, la première partie 126 comprend une face latérale 130 en regard du chant 116.1 de l'ouverture 116 de la paroi de fuselage 112.

Selon une autre configuration, le premier cadre 118.1 comprend une partie intermédiaire, reliant les première et deuxième parties 126, 128, qui présente une face latérale 130, reliant les faces extérieures 126.1, 128.1 des première et deuxième parties 126, 128, configurée pour faire face au chant 116.1 de l'ouverture 116 de la paroi de fuselage 112.

Le premier cadre 118.1 peut comprendre d'autres parties, comme une troisième partie 131 reliée à la deuxième partie 128 et sensiblement perpendiculaire à cette dernière, le deuxième cadre 118.2 de l'encadrement 118 prenant en fonctionnement appui contre cette troisième partie 131.

Selon ces configurations, le premier cadre 118.1 comprend une première surface S1, comportant au moins les faces extérieures 126.1, 128.1 des première et deuxième parties 126, 128 ainsi que la face latérale 130, reliant les faces extérieures 126.1, 128.1, configurée pour faire face au chant 116.1 de l'ouverture 116 de la paroi de fuselage 112.

Sur le plan géométrique, la première surface S1 du premier cadre 118.1 comprend une zone de jonction 133, reliant la face extérieure 126.1 de la première partie 126 et la face latérale 130, qui présente une forte courbure afin que la face latérale 130 soit sensiblement parallèle au chant 116.1 de l'ouverture 116 de la paroi de fuselage 112 et faiblement espacée dudit chant 116.1. Cette géométrie permet de limiter les perturbations aérodynamiques.

Quel que soit le mode de réalisation, un hublot 114 d'une paroi de fuselage 112 d'un aéronef comprend au moins un cadre 118.1 comportant une première surface S1 qui s'étend sur tout le pourtour du cadre 118.1.

Cette première surface S1 présente au moins des première et deuxième faces, s'étendant sur tout le pourtour du cadre 118.1, reliées par une zone de jonction 133 courbe qui s'étend également sur tout le pourtour du cadre 11.1. La première surface S1 peut comprendre d'autres faces. La première face correspond à la face extérieure 126.1 de la première partie 126 du cadre 118.1. Elle est sensiblement plane et visible depuis l'extérieur de l'aéronef lorsque le hublot 114 est positionné dans l'ouverture 116 de la paroi de fuselage 112. Lorsque le cadre 118.1 est positionné au niveau d'une ouverture 116 de la paroi de fuselage 112, la première face 126.1 affleure la face extérieure 112.1 de la paroi de fuselage 112. La deuxième face correspond à la face latérale 130. Elle est sensiblement perpendiculaire à la première face 126.1. La zone de jonction 133 présente une forte courbure.

Selon un mode de réalisation, le cadre 118.1 est réalisé d'un seul tenant, en matériau composite, et comprend des fibres noyées dans une matrice de résine. De préférence, la résine est une résine thermodurcissable.

Comme illustré sur la figure 7, le cadre 118.1 comprend des couches de fibres 132, 134 ainsi qu'au moins un renfort 136 situé au niveau de la zone de jonction 133.

Ce renfort 136 s'étend sur tout le pourtour du cadre 118.1 et présente une section en D. Il s'étend entre des premier et deuxième bords périphériques 136.1, 136.2. Ce renfort 136 peut se présenter sous la forme d'une préforme de fibres pré-imprégnées ou non. Il n'est pas plus décrit car il peut être identique à celui de l'art antérieur.

Le cadre 118.1 peut comprendre d'autres renforts.

Selon un mode de réalisation, le cadre 118.1 comprend à partir de la première surface S1 :
- une première couche 132 de fibres sèches au niveau de la première surface S1, qui s'étend sur toute la première surface S1,
- des couches intermédiaires 134 de fibres sèches positionnées sous la première couche 132, qui s'étendent sur toute la première surface S1,
- un renfort 136 avec une section en D, positionné au niveau de la zone de jonction 133 à forte courbure.

Généralement, le cadre 118.1 comprend des couches intérieures 134' de fibres sèches, le renfort 136 étant intercalé entre les couches intermédiaires et intérieures 134, 134'.

Selon une variante simplifiée, le cadre 118.1 ne comprend aucune couche intermédiaire 134 entre la première couche 132 et le renfort 136. Selon une configuration, le cadre 118.1 comprend une seule couche intermédiaire 134 entre la première couche 132 et le renfort 136.

La première couche 132 recouvre le renfort 136 et s'étend de part et d'autre de ce dernier, au-delà des premier et deuxième bords périphériques 136.1, 136.2. Selon une configuration, la première couche 132 recouvre toute la première face correspondant à la face extérieure 126.1 de la première partie 126. Elle peut également recouvrir toute la deuxième face correspondant à la face latérale 130.

Les couches intermédiaires 134 recouvrent le renfort 136 et s'étendent de part et d'autre de ce dernier, au-delà des premier et deuxième bords périphériques 136.1, 136.2. Selon une configuration, les couches intermédiaires 134 recouvrent toute la première face correspondant à la face extérieure 126.1 de la première partie 126. Elles peuvent également recouvrir toute la deuxième face correspondant à la face latérale 130.

Les fibres des différentes couches 132, 134, 134' sont en carbone. Bien entendu, l'invention n'est pas limitée à cette matière.

Les différentes couches 132, 134, 134' peuvent être des couches tissées ou non tissées.

Les différentes couches 132, 134, 134' présentent des fibres qui peuvent être orientées de la même manière ou de manière différente.

Selon une caractéristique, le cadre 118.1 comprend au moins une couche barrière 138 recouvrant le renfort 136, intercalée entre le renfort 136 et la première surface S1 et configurée pour limiter la propagation de résine du renfort 136 vers la première surface S1. La présence de cette couche barrière 138 permet d'éviter, au niveau de la zone de jonction 133, la propagation de résine vers la première surface S1 et la formation de zones ponctuelles d'accumulation de résine. Ainsi, la surface extérieure S1 du cadre 118.1 a un comportement plus homogène et n'engendre pas de modifications visuelles sur la peinture.

Selon une configuration, le cadre 118.1 comprend une seule couche barrière 138.

Selon un agencement, la couche barrière 138 est au contact du renfort 136. Elle est intercalée entre le renfort 136 et les couches intermédiaires 134.

Selon une configuration non limitative, la couche barrière 138 s'étend du premier bord périphérique 136.1 du renfort 136 jusqu'à son deuxième bord périphérique 136.2. Elle ne s'étend pas au-delà des premier et deuxième bords périphériques 136.1, 136.2 du renfort 136. Selon un mode de réalisation, la couche barrière 138 comprend au moins un pli de fibres de verre. Bien entendu, l'invention n'est pas limitée à cette matière.

Selon une configuration, la couche barrière 138 est un pli tissé qui présente des mailles réduites limitant la propagation de résine à travers la couche barrière 138.

Selon un mode de réalisation, le cadre 118.1 comprend au moins une première couture 140 reliant au moins le renfort 136 et au moins certaines couches, comme la couche barrière 138, la première couture 140 comportant un ensemble de piqures ne traversant aucune couche de fibres 132, 134 présente entre le renfort 136 et la première surface S1 au moins au niveau de la première face (correspondant à la face extérieure 126.1 de la première partie 126) et de la zone de jonction 133. Quel que soit le mode de réalisation, les piqures de la première couture 140 n'atteignent pas la première surface S1 et sont décalées par rapport à cette dernière de manière à ne pas être visibles depuis la première surface S1 au moins au niveau de la première face 126.1 et de la zone de jonction 133.

Le fait que les piqures de la première couture 140 soient décalées par rapport à la première surface S1 (et distantes de cette dernière), au niveau de la zone de jonction 133 et de la première face, permet d'éviter que de la résine n'atteigne la première couche 132 en migrant le long des fils de la première couture 140. Cet agencement permet de limiter la propagation par migration de résine vers la première surface S1 et la formation de zones ponctuelles d'accumulation de résine. Ainsi, la première surface S1 du cadre 118.1, au moins au niveau de la première face et de la zone de jonction, a un comportement plus homogène et n'engendre pas de modifications visuelles sur la peinture.

Selon un mode de réalisation visible sur la figure 7, le cadre 118.1 comprend au moins une deuxième couture 142 décalée de la zone de jonction 133, de la première face correspondant à la face extérieure 126.1 de la première partie 126 et de préférence de la deuxième face correspondant à la face latérale 130. Cette deuxième couture 142 peut comprendre des piqures traversantes (qui traversent toutes les couches de fibres 132, 134 134') et visibles depuis la première surface S1.

Contrairement à l'art antérieur, le cadre 118.1 ne comprend aucune couche en matériau conducteur recouvrant la première couche de fibres 132 sèches au moins au niveau des première et deuxième faces (correspondant à la face extérieure 126.1 de la première partie 126 et à la face latérale 130) et de la zone de jonction 133. Ainsi, la surface S1 présente un aspect homogène au droit de ces zones.

Le procédé de réalisation du cadre 118.1 comprend une étape d'assemblage des différentes couches 132, 134, 134', du renfort 136 et de la couche barrière 138 en les superposant. Lors de cette étape d'assemblage, au moins une couche barrière 138 est positionnée entre le renfort 136 et la première surface S1 de manière à recouvrir le renfort 136 et former une barrière limitant la propagation de résine en direction de la première surface S1. Lors de l'étape d'assemblage, au moins une première couture 140 peut être réalisée pour relier le renfort 136 et la couche barrière 138 assemblés. Cette première couture 140 comprend des piqures non visibles depuis la première surface S1 et distantes de cette dernière afin de limiter la propagation de résine vers la première surface S1. En variante, pour maintenir les différentes couches 132, 134, 134' liées entre elles avant qu'elles ne soient polymérisées ou consolidées, le procédé comprend une étape de saupoudrage d'une résine entre les couches et de chauffage à une température, de l'ordre de 80° C, inférieure à une température de polymérisation ou de consolidation pour activer la pégosité de la résine. Ainsi, il n'est plus nécessaire de prévoir de coutures.

En suivant, le procédé comprend une étape de consolidation ou de polymérisation d'une résine, l'assemblage des différentes couches 132, 134, 134', du renfort 136 et de la couche barrière 138 étant positionné sur un moule et recouvert d'au moins une enveloppe souple, étanche et reliée de manière étanche au moule tout autour de l'assemblage. Lors de l'étape de consolidation ou de polymérisation, l'assemblage est soumis à un cycle de pressions et de températures. Selon un mode opératoire, les différentes couches 132, 134, 134' sont sèches et non pré-imprégnées. Dans ce cas, lors de l'étape de consolidation ou de polymérisation, les fibres des différentes couches 132, 134, 134' sont noyées dans une résine thermodurcissable lors d'un procédé de moulage par transfert de résine.

A l'issue de cette étape de consolidation ou de polymérisation, le procédé comprend une étape de démoulage du cadre 118.1 durci.

## Revendications

1. Procédé de fabrication d'un cadre (118.1) de hublot d'aéronef, ledit cadre comportant une première surface (S1) qui présente au moins des première et deuxième faces (126.1, 130), s'étendant sur tout le pourtour du cadre, reliées par une zone de jonction (133) courbe, ledit cadre (118.1) étant réalisé en un matériau composite qui comporte des fibres noyées dans une matrice de résine, le procédé de fabrication comprenant une étape d'assemblage de couches de fibres (132, 134, 134') et d'au moins un renfort (136) situé au niveau de la zone de jonction (133)et présentant des premier et deuxième bords périphériques (136.1, 136.2), une étape de consolidation ou de polymérisation de l'assemblage ainsi qu'une étape de démoulage du cadre ; **caractérisé en ce que** lors de l'étape d'assemblage, une couche barrière (138) est positionnée entre le renfort (136) et la première surface (S1) de manière à recouvrir le renfort (136) et former une barrière limitant une propagation de résine en direction de la première surface (S1).

2. Procédé de fabrication d'un cadre de hublot d'aéronef selon la revendication 1, **caractérisé en ce que** lors de l'étape d'assemblage, la couche barrière (138) est positionnée au contact du renfort (136).

3. Procédé de fabrication d'un cadre de hublot d'aéronef selon l'une des revendications précédentes, **caractérisé en ce que** la couche barrière (138) ne s'étend pas au-delà des premier et deuxième bords périphériques (136.1, 136.2) du renfort (136).

4. Procédé de fabrication d'un cadre de hublot d'aéronef selon la revendication précédente, **caractérisé en ce que** lors de l'étape d'assemblage, au moins une couture (140) est réalisée de manière à relier au moins le renfort (136) et la couche barrière (138), la couture (140) comprenant des piqures décalées de la première surface (S1) au moins au niveau des première et deuxième faces (126.1, 130).

5. Procédé de fabrication d'un cadre de hublot d'aéronef selon l'une des revendications précédentes, **caractérisé en ce que** le procédé comprend une étape de saupoudrage d'une résine entre les couches de fibres (132, 134) et de chauffage à une température inférieure à une température de polymérisation ou de consolidation pour activer la pégosité de la résine afin de maintenir les différentes couches (132, 134) liées entre elles avant l'étape de consolidation ou de polymérisation.

6. Cadre de hublot d'aéronef fabriqué à partir du procédé selon l'une des revendications précédentes, ledit cadre comportant une première surface (S1) qui présente au moins des première et deuxième faces (126.1, 130) s'étendant sur tout le pourtour du cadre et reliées par une zone de jonction (133) courbe, ledit cadre (118.1) étant réalisé en un matériau composite qui comporte des fibres noyées dans une matrice de résine, ledit cadre (118.1) comprenant un empilage de couches (132, 134, 134') ainsi qu'au moins un renfort (136) situé au niveau de la zone de jonction (133) et présentant des premier et deuxième bords périphériques (136.1, 136.2) ; **caractérisé en ce que** le cadre (118.1) comprend au moins une couche barrière (138) recouvrant le renfort (136), positionnée entre le renfort (136) et la première surface (S1) et configurée pour former une barrière limitant une propagation de résine en direction de la première surface (S1).

7. Cadre de hublot d'aéronef selon la revendication précédente, **caractérisé en ce que** la couche barrière (138) est en contact avec le renfort (136).

8. Cadre de hublot d'aéronef selon l'une des revendications 6 à 7, **caractérisé en ce que** la couche barrière (138) ne s'étend pas au-delà des premier et deuxième bords périphériques du renfort (136).

9. Cadre de hublot d'aéronef selon l'une des revendications 6 à 8, **caractérisé en ce que** la couche barrière (138) comprend au moins un pli de fibres de verre.

10. Cadre de hublot d'aéronef selon l'une des revendications 6 à 9, **caractérisé en ce que** le cadre comprend au moins une couture (140) reliant au moins le renfort (136) et la couche barrière (138) et comportant des piqures espacées de la première surface (S1).

11. Cadre de hublot d'aéronef selon l'une des revendications 6 à 10, **caractérisé en ce que** le cadre comprend au moins une première couche (132) de fibres intercalée entre le renfort (136) et la première surface (S1).

12. Aéronef comprenant au moins un cadre de hublot selon l'une des revendications 6 à 11.

## Patentansprüche

1. Verfahren zur Herstellung eines Rahmens (118.1) für ein Fenster eines Luftfahrzeugs, wobei der Rahmen eine erste Oberfläche (S1) umfasst, die wenigstens eine erste und eine zweite Seite (126.1, 130) aufweist, die sich über den gesamten Umfang des Rahmens erstrecken und durch eine gekrümmte Verbindungszone (133) verbunden sind, wobei der Rahmen (118.1) aus einem Verbundmaterial hergestellt ist, das in eine Harzmatrix eingebettete Fasern enthält, wobei das Herstellungsverfahren einen Schritt des Zusammenfügens von Faserschichten (132, 134, 134') und wenigstens einer Verstärkung (136) umfasst, die sich im Bereich der Verbindungszone (133) befindet und einen ersten und einen zweiten Umfangsrand (136.1, 136.2) aufweist, einen Schritt der Verfestigung oder Polymerisation der Verbindung sowie einen Schritt des Entformens des Rahmens, **dadurch gekennzeichnet, dass** beim Schritt des Zusammenfügens eine Sperrschicht (138) zwischen der Verstärkung (136) und der ersten Oberfläche (S1) so angeordnet wird, dass sie die Verstärkung (136) bedeckt und eine Barriere bildet, die eine Ausbreitung des Harzes in Richtung der ersten Oberfläche (S1) begrenzt.

2. Verfahren zur Herstellung eines Rahmens für ein Fenster eines Luftfahrzeugs nach Anspruch 1, **dadurch gekennzeichnet, dass** beim Schritt des Zusammenfügens die Sperrschicht (138) in Kontakt mit der Verstärkung (136) angeordnet wird.

3. Verfahren zur Herstellung eines Rahmens für ein Fenster eines Luftfahrzeugs nach einem der vorhergehenden Ansprüche, **dadurch gekennzeichnet, dass** sich die Sperrschicht (138) nicht über den ersten und zweiten Umfangsrand (136.1, 136.2) der Verstärkung (136) hinaus erstreckt.

4. Verfahren zur Herstellung eines Rahmens für ein Fenster eines Luftfahrzeugs nach dem vorhergehenden Anspruch, **dadurch gekennzeichnet, dass** bei dem Schritt des Zusammenfügens wenigstens eine Naht (140) hergestellt wird, um wenigstens die Verstärkung (136) und die Sperrschicht (138) zu verbinden, wobei die Naht (140) Nähte umfasst, die wenigstens im Bereich der ersten und zweiten Fläche (126.1, 130) von der ersten Oberfläche (S1) beabstandet sind.

5. Verfahren zur Herstellung eines Rahmens für ein Fenster eines Luftfahrzeugs nach einem der vorhergehenden Ansprüche, **dadurch gekennzeichnet, dass** das Verfahren einen Schritt umfasst, bei dem ein Harz zwischen die Faserschichten (132, 134) gestreut und auf eine Temperatur unterhalb einer Polymerisations- oder Verfestigungstemperatur erhitzt wird, um die Klebrigkeit des Harzes zu aktivieren, um die verschiedenen Schichten (132, 134) vor dem Verfestigungs- oder Polymerisationsschritt miteinander verbunden zu halten.

6. Rahmen für ein Fenster eines Luftfahrzeugs, hergestellt nach dem Verfahren gemäß einem der vorhergehenden Ansprüche, wobei der Rahmen eine erste Oberfläche (S1) umfasst, die wenigstens eine erste und eine zweite Fläche (126.1, 130) aufweist, die sich über den gesamten Umfang des Rahmens erstrecken und durch eine gekrümmte Verbindungszone (133) verbunden sind, wobei der Rahmen (118.1) aus einem Verbundmaterial hergestellt ist, das in eine Harzmatrix eingebettete Fasern enthält, wobei der Rahmen (118.1) einen Stapel von Schichten (132, 134, 134') sowie wenigstens eine Verstärkung (136) umfasst, die sich im Bereich der Verbindungszone (133) befindet und einen ersten und einen zweiten Umfangsrand (136.1, 136.2) aufweist, **dadurch gekennzeichnet, dass** der Rahmen (118.1) wenigstens eine Sperrschicht (138) umfasst, die die Verstärkung (136) bedeckt, zwischen der Verstärkung (136) und der ersten Oberfläche (S1) angeordnet und so eingerichtet ist, dass sie eine Barriere bildet, die eine Ausbreitung von Harz in Richtung der ersten Oberfläche (S1) begrenzt.

7. Rahmen für ein Fenster eines Luftfahrzeugs nach dem vorhergehenden Anspruch, **dadurch gekennzeichnet, dass** die Sperrschicht (138) mit der Verstärkung (136) in Kontakt steht.

8. Rahmen für ein Fenster eines Luftfahrzeugs nach einem der Ansprüche 6 bis 7, **dadurch gekennzeichnet, dass** sich die Sperrschicht (138) nicht über den ersten und zweiten Umfangsrand der Verstärkung (136) hinaus erstreckt.

9. Rahmen für ein Fenster eines Luftfahrzeugs nach einem der Ansprüche 6 bis 8, **dadurch gekennzeichnet, dass** die Sperrschicht (138) wenigstens eine Lage aus Glasfasern umfasst.

10. Rahmen für ein Fenster eines Luftfahrzeugs nach einem der Ansprüche 6 bis 9, **dadurch gekennzeichnet, dass** der Rahmen wenigstens eine Naht (140) aufweist, die wenigstens die Verstärkung (136) und die Sperrschicht (138) verbindet und Nähte aufweist, die von der ersten Oberfläche (S1) beabstandet sind.

11. Rahmen für ein Fenster eines Luftfahrzeugs nach einem der Ansprüche 6 bis 10, **dadurch gekennzeichnet, dass** der Rahmen wenigstens eine erste Schicht (132) aus Fasern umfasst, die zwischen der Verstärkung (136) und der ersten Oberfläche (S1) angeordnet ist.

12. Luftfahrzeug mit wenigstens einem Fensterrahmen nach einem der Ansprüche 6 bis 11.

## Claims

1. Method of manufacturing an aircraft window frame (118.1), said frame having a first surface (S1) that has at least first and second faces (126.1, 130) extending all around the frame and connected by a curved junction zone (133), said frame (118.1) being made of a composite material that includes fibers embedded in a resin matrix, the method of manufacture including a step of assembling fiber layers (132, 134, 134') and at least one reinforcement (136) situated at the level of the junction zone (133) and having first and second peripheral edges (136.1, 136.2), a step of consolidation or polymerization of the assembly, and a step of removing the frame from the mold; **characterized in that** during the assembly step a barrier layer (138) is positioned between the reinforcement (136) and the first surface (S1) in such a manner as to cover the reinforcement (136) and to form a barrier limiting propagation of resin in the direction of the first surface (S1).

2. Method as claimed in claim 1 of manufacturing an aircraft window frame **characterized in that** during the assembly step the barrier layer (138) is positioned in contact with the reinforcement (136).

3. Method as claimed in either one of the preceding claims of manufacturing an aircraft window frame **characterized in that** the barrier layer (138) does not extend beyond first and second peripheral edges (136.1, 136.2) of the reinforcement (136).

4. Method as claimed in the preceding claim of manufacturing an aircraft window frame **characterized in that** during the assembly step at least one seam (140) is produced in such a manner as to connect at least the reinforcement (136) and the barrier layer (138), the seam (140) including stitching offset from the first surface (S1) at least at the level of the first and second faces (126.1, 130).

5. Method as claimed in any one of the preceding claims of manufacturing an aircraft window frame **characterized in that** the method includes a step of scattering a resin between the fiber layers (132, 134) and heating to a temperature below a polymerization or consolidation temperature to activate the tackiness of the resin in order to keep the various layers (132, 134) interconnected before the consolidation or polymerization step.

6. Aircraft window frame manufactured by the method as claimed in any one of the preceding claims, said frame including a first surface (S1) that has at least first and second faces (126.1, 130) extending all around the frame and connected by a curved junction zone (133), said frame (118.1) being made of a composite material that includes fibers embedded in a resin matrix, said frame (118.1) including a stack of layers (132, 134, 134') and at least one reinforcement (136) situated at the level of the junction zone (133) and having first and second peripheral edges (136.1, 136.2), **characterized in that** the frame (118.1) includes at least one barrier layer (138) covering the reinforcement (136), positioned between the reinforcement (136) and the first surface (S1) and configured to form a barrier limiting propagation of resin in the direction of the first surface (S1).

7. Aircraft window frame as claimed in the preceding claim **characterized in that** the barrier layer (138) is in contact with the reinforcement (136).

8. Aircraft window frame as claimed in either one of claims 6 or 7 **characterized in that** the barrier layer (138) does not extend beyond the first and second peripheral edges of the reinforcement (136).

9. Aircraft window frame as claimed in any one of claims 6 to 8 **characterized in that** the barrier layer (138) includes at least one ply of glass fibers.

10. Aircraft window frame as claimed in any one of claims 6 to 9 **characterized in that** the frame includes at least one seam (140) connecting at least the reinforcement (136) and the barrier layer (138) and including stitching spaced from the first surface (S1).

11. Aircraft window frame as claimed in any one of claims 6 to 10 **characterized in that** the frame includes at least one first layer (132) of fibers interleaved between the reinforcement (136) and the first surface (S1).

12. Aircraft including at least one window frame as claimed in any one of claims 6 to 11.
